# FASCICULE DE BREVET EUROPEEN

(11) **EP 1 686 438 B1**
(45) Date de publication et mention de la délivrance du brevet: **20.10.2010**
(21) Numéro de dépôt: 05028024.7
(22) Date de dépôt: 21.12.2005
(51) Int. Cl.: G05B 19/042

(54) **Outil de programmation destiné à la configuration d'une installation domotique**
Programmierwerkzeug zur Konfiguration eines Hausleitsystemes
Programming tool for configuring a domestic control system

(30) Priorité: 26.01.2005 FR 0500790
(43) Date de publication de la demande: 02.08.2006
(60) Demande divisionnaire: 08164291.0
(73) Titulaire: Somfy SAS, 74300 Cluses (FR)
(72) Inventeur: Tscherny, Georg, 71155 Altdorf (DE); Blockhaus, Harry, 72411 Bodelshausen (DE); Mueller, Thomas, 72336 Balingen (DE); Reiner, Thomas, 72810 Gomaringen (DE); Rilling, Oliver, 72810 Gomaringen-Stockach (DE); Schoen, Hendrik, 72070 Tübingen-Hirschau (DE); Alingery, Yvanh, 74000 Annecy (FR); Lagarde, Eric, 74700 Sallanches (FR); Hoff, Laurent, 74250 Peillonnex (FR)
(74) Mandataire: Bugnion Genève

(56) Documents cités:
- EP-A- 0 141 443
- EP-A- 1 154 121

## Description

L'invention concerne un outil de programmation selon le préambule de la revendication 1. Elle concerne également un système domotique selon le préambule de la revendication 9. Elle concerne en outre un procédé de configuration d'une installation domotique comprenant un dispositif de fermeture, d'occultation, de protection solaire ou d'écran équipant un bâtiment et une interface de commande de ce dispositif. Elle concerne enfin un procédé de configuration d'une unité de commande d'un dispositif de fermeture, d'occultation, de protection solaire ou d'écran équipant un bâtiment et une unité de commande pour sa mise en oeuvre.

Les dispositifs de fermeture, d'occultation, de protection solaire ou d'écran équipant les bâtiments comprennent des éléments mobiles qui peuvent être manoeuvrés grâce à des actionneurs électriques alimentés par des sources d'énergie électrique via une interface de commande. Il est intéressant d'alimenter l'actionneur en énergie électrique par l'intermédiaire de l'interface de commande. Cela permet de limiter les opérations de câblage et de limiter le nombre de câbles qu'il faut faire entrer dans le carter de l'actionneur. L'inconvénient lié à cette construction est évidemment que l'actionneur n'est alimenté qu'au moment d'une commande utilisateur ou d'une commande d'un automatisme. La source d'énergie électrique peut par exemple être le réseau alternatif, par exemple 230 V 50 Hz.

Le câble électrique reliant l'interface de commande à l'unité de commande associée à l'actionneur comprend en général trois fils : un fil de neutre et deux fils de phase, le mouvement du moteur étant commandé dans un premier sens lorsque la tension est appliquée entre le conducteur de neutre et le premier conducteur de phase et commandé dans un deuxième sens lorsque la tension est appliquée entre le conducteur de neutre et le deuxième conducteur de phase.

Pour des raisons de coûts ou parce que le dispositif domotique a été installé en remplacement d'un autre équipement domotique vétuste, l'interface de commande est très simple, elle ne comprend par exemple que deux ou trois touches de commande normalement associées à des ordres de montée et de descente de l'élément mobile et éventuellement à des ordres d'arrêt et de mise en position intermédiaire.

Du fait de l'architecture d'un tel dispositif électrique, en particulier du faible nombre de touches de commande, il est difficile d'effectuer certaines opérations telles que :
- la configuration de l'interface de commande pour assurer qu'une action sur une touche de l'interface devant entraîner la montée de l'élément mobile provoque effectivement une montée de l'élément mobile,
- l'apprentissage du sens de rotation (nécessaire bien que les mouvements de l'élément mobile correspondent aux appuis sur les touches de l'interface de commande) si l'actionneur comprend des moyens de détection de butée électronique ayant un comportement différent selon que l'élément mobile arrive en fin de course haute ou basse. En effet, l'actionneur ne connaît pas son sens d'orientation, vu qu'il peut avoir été monté à droite ou à gauche),
- le réglage de fins de course,
- la réinitialisation des fins de course et/ou des sens de rotation,
- le re-réglage de fins de course,
- le réglage d'une position intermédiaire de l'élément mobile.

Ces opérations de configuration peuvent être effectuées lors de l'installation de l'actionneur, par exemple lors de la première mise sous tension de l'actionneur, mais également pendant le cycle de vie du dispositif domotique lors d'opérations de maintenance par exemple. Certaines étapes de configuration telles que les enregistrements de positions de fin de course peuvent être effectuées automatiquement si les actionneurs disposent de moyens électroniques le permettant.

L'interface de commande doit aussi assurer, en plus des fonctions de réglages énumérées, les fonctions de commande de déplacement de l'élément mobile vers le haut, de déplacement de l'élément mobile vers le bas et d'arrêt du déplacement de l'élément mobile. Même dans un mode de configuration et quel que soit le procédé d'entrée dans ce mode, il faut pouvoir déplacer l'élément mobile vers le haut et vers le bas afin de pouvoir valider des configurations ou enregistrer des positions. Il est également possible de définir des ergonomies qui permettent de valider des configurations ou enregistrer des paramètres ou positions sans véritablement changer de mode de fonctionnement. Ces validations et enregistrements ne doivent pas pouvoir être réalisés de manière intempestive.

On connaît de la demande WO 00/49262 un dispositif de manoeuvre d'un élément de fermeture. Le dispositif comprend une interface de commande munie de deux touches permettant respectivement de commander les déplacements d'un élément mobile dans un premier sens et dans un deuxième sens. Pour placer ce dispositif dans un mode de configuration, il est nécessaire d'actionner au moins deux fois l'une ou l'autre des touches dans une plage temporelle prédéfinie et inférieure à la durée d'actionnement permettant la commande du mouvement de l'élément mobile. Ainsi, lorsqu'on veut commander le déplacement de l'élément mobile, il est nécessaire d'actionner la touche de commande pendant une durée supérieure à celle de la plage temporelle prédéfinie. De tels appuis prolongés ne sont pas intuitifs et les ergonomies permettant d'effectuer les différentes opérations de réglages sont compliquées.

Cette méthode est peu pratique dans la mesure où elle nécessite que l'installateur appuie sur certaines touches de l'interface de commande pendant des durées relativement précises de l'ordre de quelques dixièmes de secondes ou de quelques secondes. Chaque personne n'ayant pas la même notion de la durée d'une seconde, cette méthode se révèle problématique.

On connaît en outre des demandes EP 0 426 577 et EP 0 770 757 d'autres méthodes permettant le réglage de positions de fin de course d'un élément mobile.

On connaît de la demande EP 1 154 121 un dispositif de commande de moteur électrique dans lequel des procédures de programmation sont réalisées par la mise en place d'un shunt entre deux conducteurs pendant une durée déterminée. Les deux conducteurs relient en permanence une interface de commande à un moteur électrique, une action de l'utilisateur sur l'interface de commande permettant de connecter la phase du réseau de distribution électrique à l'un des deux conducteurs. Les procédures de programmation sont fastidieuses à mettre en oeuvre avec un tel dispositif.

Le but de l'invention est de fournir un outil de programmation permettant de se passer des méthodes précitées et améliorant les moyens habituellement utilisés pour réaliser la programmation des dispositifs domotiques. Elle a encore pour but de fournir un procédé de configuration d'une installation domotique utilisant un outil de programmation et une unité de commande d'un dispositif domotique.

L'outil de programmation selon l'invention est caractérisé par la partie caractérisante de la revendication 1.

Différents modes de réalisation de l'outil de programmation sont définis par les revendications dépendantes 2 à 8.

Le système domotique selon l'invention est défini par la revendication 9.

Un mode de réalisation du système est défini par la revendication 10.

Le procédé selon l'invention pour la configuration d'une installation domotique est défini par la revendication 11.

Différents modes d'exécution du procédé sont définis par les revendications 12 et 13.

La figure 1 est un schéma d'un outil de programmation connecté à un dispositif domotique.

La figure 2 est un schéma d'une installation domotique installé et d'un outil de programmation non connecté au dispositif domotique.

La figure 3 est un schéma d'un mode de réalisation d'une interface de programmation assistée de l'outil de programmation.

La figure 4 est un schéma représentant les différents modes de fonctionnement de l'outil de programmation.

La figure 5 est un schéma électrique détaillé d'un outil de programmation selon l'invention et d'un dispositif domotique destiné à coopérer avec un tel outil.

La figure 6 est un ordinogramme d'une procédure de configuration d'une unité de commande.

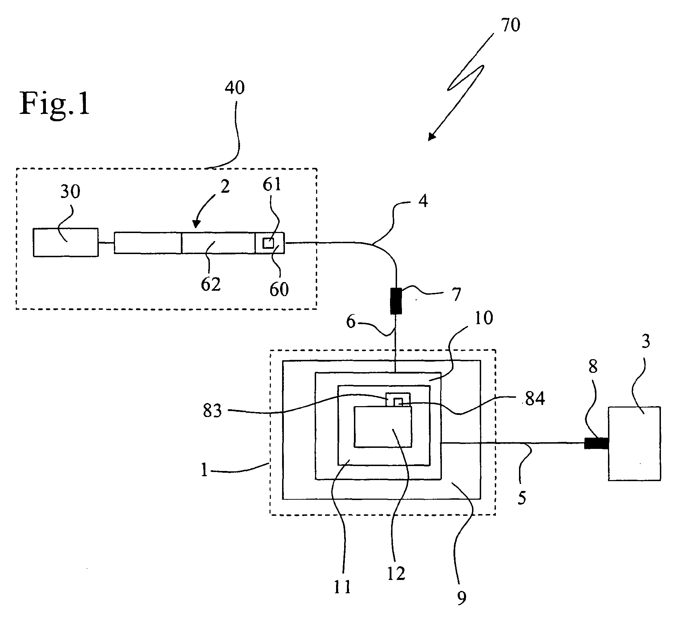

L'installation 70 (en cours de montage) représentée à la figure 1 comprend principalement une source d'énergie électrique 3 telle que le réseau alternatif, un outil de programmation 1 et un dispositif 40 de fermeture, d'occultation, de protection solaire ou d'écran. Le dispositif 40 comprend un actionneur 2 destiné à manoeuvrer un élément mobile 30 de fermeture, d'occultation, de protection solaire ou d'écran. Cet élément 30 peut par exemple consister en un volet roulant, en un store, en une porte de garage, en un portail ou en un écran de projection audiovisuelle.

L'actionneur comprend notamment un moteur électrique 62 et une unité de commande 60 qui seront décrits plus en détails plus bas.

L'outil de programmation est destiné à configurer l'actionneur c'est-à-dire à stocker dans une mémoire 61, dans l'unité de commande 60 de l'actionneur, des informations relatives notamment :
- aux positions de fins de course de l'élément mobile,
- à une ou plusieurs positions intermédiaires de l'élément mobile,
- une table d'association entre les touches de commande d'une interface de commande et les actions exécutées suites à des actions sur ces touches.

Sur la figure 1, l'outil de programmation 1 est relié électriquement d'une part à l'actionneur 2 au moyen de câbles 4, 6 et, d'autre part, à la source d'énergie électrique 3 au moyen d'un câble 5. La connexion électrique de l'actionneur 2 à l'outil de programmation 1 peut être réalisée au moyen de tout connecteur 7 électrique utilisable pour relier les conducteurs du câble 4 lié à l'actionneur et les conducteurs du câble 6 lié à l'outil de programmation. Le connecteur 7 est de préférence un connecteur permettant une connexion et déconnexion rapide et aisée. Si le câble 4 présente déjà un connecteur, par exemple un connecteur de type Hirschmann, un connecteur du même type susceptible de coopérer avec ce-dernier est prévu sur le câble 6.

Le câble 5 est de préférence lié à l'outil de programmation et présente un connecteur 8 lui permettant d'être relié électriquement à la source d'énergie électrique 3.

Les câbles 5 et 6 peuvent également ne pas être liés de manière inamovible à l'outil de programmation mais peuvent y être branchés par l'intermédiaire de connecteurs.

La source d'énergie électrique peut également consister, à titre d'exemples, en une batterie d'accumulateur ou en un panneau photovoltaïque.

L'outil de programmation 1 comprend un boîtier 9 par exemple réalisé en matière plastique qui peut être ouvert et refermé et qui contient un dispositif de programmation 10. Ce boîtier 9 permet de protéger, notamment contre d'éventuels chocs ou projections d'eau, le dispositif de programmation 10.

Le dispositif de programmation 10 comprend une embase 11 de programmation sur laquelle est fixée de manière amovible une interface de programmation assistée 12. L'embase 11 est fixée à demeure au boîtier 9 alors que l'interface de programmation assistée 12 peut être montée sur l'embase 11 et démontée à volonté. Pour ce faire, des moyens 83 de liaison mécanique et électrique sont prévus sur l'embase 11 de programmation et coopèrent avec des éléments 84 complémentaires de liaison mécanique et électrique prévus sur l'interface de programmation assistée 12 pour lier de manière amovible l'interface de programmation assistée 12 à l'embase 11.

Ces moyens peuvent notamment consister en des pattes métalliques rigides venant se ficher en force entre des lames métalliques élastiques ou en tout autre type de connecteur susceptible d'assurer une bonne liaison mécanique.

Des espaces peuvent être ménagés dans le boîtier 9 autour de l'embase 11 de manière à pouvoir ranger les câbles 5, 6 avant fermeture de celui-ci. Dans ces espaces peuvent être rangés un manuel de programmation ainsi que des outillages permettant de faciliter les opérations de connexion et de déconnexion des câbles.

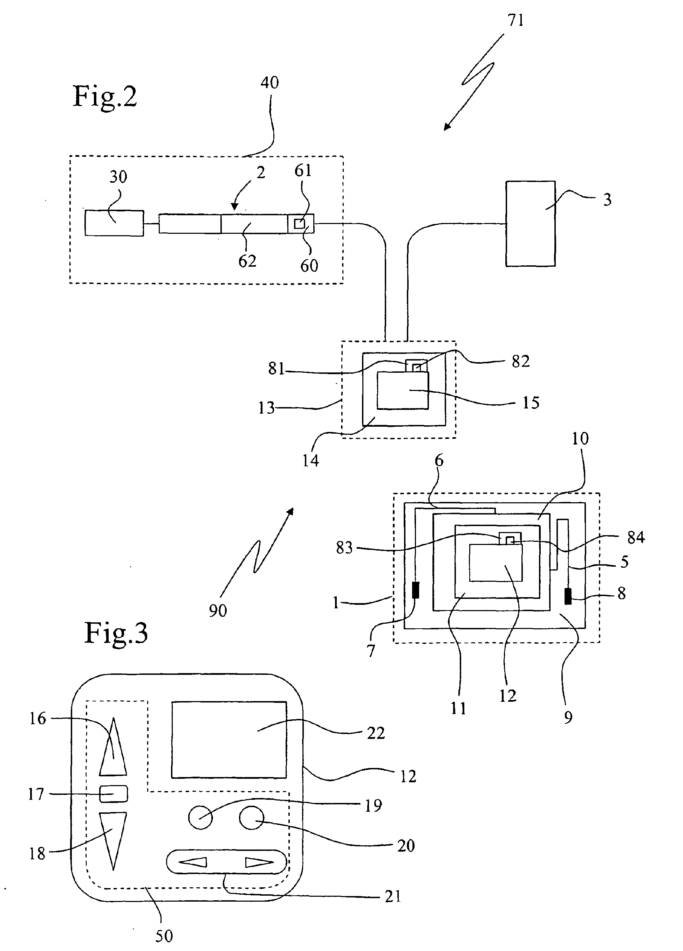

L'installation 71 représentée à la figure 2 est mécaniquement et électriquement compatible avec l'outil de programmation. Cette installation est similaire à celle décrite à la figure 1, les mêmes références étant reprises pour les éléments communs. Elle diffère de celle représentée en ce qu'elle présente une interface de commande 15, liée mécaniquement et électriquement de manière amovible à une embase de commande 14, ces éléments constituant un ensemble de commande 13. En effet, cette installation est représentée après montage dans le bâtiment qu'elle est destinée à équiper. Pour assurer la liaison mécanique et électrique, des moyens 81 de liaison mécanique et électrique sont prévus sur l'embase 14 de commande et coopèrent avec des éléments 82 complémentaires de liaison mécanique et électrique prévus sur l'interface de commande 15 pour lier de manière amovible l'interface de commande 15 à l'embase 14.

Ces moyens peuvent notamment consister en des pattes métalliques rigides venant se ficher en force entre des lames métalliques élastiques ou en tout autre type de connecteur susceptible d'assurer une bonne liaison mécanique.

L'embase 14 de commande est identique à l'embase 11 de l'outil de programmation. De cette façon, pour configurer l'actionneur, l'interface de programmation assistée peut être montée sur l'embase 14 après que l'interface de commande a été retirée.

L'embase 14 de commande a déjà été connectée à la source d'énergie électrique et à l'actionneur lors du montage de l'installation 71. De cette manière, dès que l'interface de programmation assistée 12 est montée sur l'embase 14, elle est reliée électriquement à l'actionneur 2 et à la source d'énergie électrique 3. Grâce à de tels moyens, les interfaces peuvent être connectées à l'actionneur 40 et à la source d'énergie électrique 3 rapidement et aisément.

Il est à noter que l'outil de programmation 1 peut également comprendre à l'intérieur de son boîtier sa propre source d'énergie électrique. Ainsi, la connexion à une source d'énergie électrique du bâtiment n'est plus nécessaire. Ceci permet par exemple d'effectuer des opérations de configuration sur des dispositifs installés dans des bâtiments qui ne sont provisoirement pas reliés au réseau.

De manière préférée, les circuits électroniques compris dans l'interface de commande et dans l'interface de programmation assistée sont identiques, les programmes stockés dans les mémoires de ces circuits leur permettant d'assurer différentes fonctions. Pour des raisons de coût l'interface de commande est généralement simplifiée à l'extrême et ne comporte par exemple que deux interrupteurs. De manière préférée, il existe cependant au moins un modèle d'interface de commande (comportant par exemple une fonction horloge programmable) dont les circuits électroniques sont similaires à ceux utilisés dans l'interface de programmation assistée, cette dernière bénéficiant alors des coûts de série de la première.

L'interface de programmation assistée 12 représentée à la figure 3 peut présenter des moyens d'information de l'utilisateur 22 comprenant par exemple un écran d'affichage. Elle comprend en outre un clavier 50 comportant plus de touches 16, 17, 18, 19, 20 et 21 que l'interface de commande 15, quand il s'agit d'une interface de commande simplifiée.

Par exemple, pour enregistrer une position de fin de course de l'élément mobile, celui-ci doit être déplacé dans la position désirée à l'aide de l'actionneur 40. Dans le cas où l'interface de programmation assistée est liée à l'actionneur, les déplacements de l'élément mobile sont commandés par des appuis sur les touches 16, 17 ou 18, la touche 16 commandant la montée de l'élément, la touche 17 son arrêt et la touche 18 sa descente. Cependant, ces mouvements peuvent être commandés par des appuis sur d'autres touches de l'interface de programmation assistée.

Différents modes de fonctionnement de l'interface de programmation assistée, tels que par exemple un mode de configuration, un mode de test et un mode de remise à zéro peuvent être sélectionnés par appui sur une touche 19. A l'intérieur de ces modes différents étapes peuvent être sélectionnées en utilisant des touches 20 et 21. Le mode et l'étape dans laquelle se trouve l'interface peuvent être visualisés grâce aux moyens d'information de l'utilisateur 22.

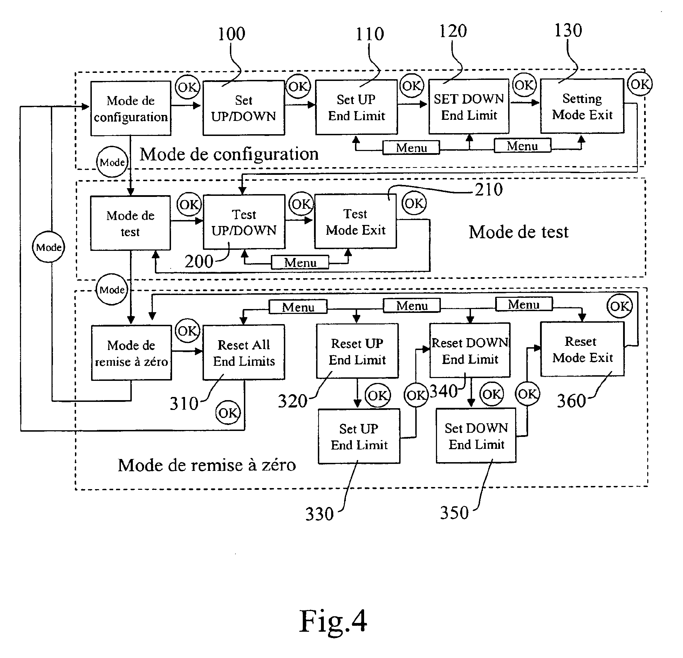

Un exemple de fonctionnement de l'interface de programmation assistée est décrit ci-dessous en référence à l'organigramme de la figure 4.

Par action sur la touche de mode 19, l'un des trois modes de fonctionnement peut être sélectionné : le mode de configuration, le mode de test ou le mode de remise à zéro. Pour entrer dans le mode désirée la touche « OK » 20 doit être actionnée.

La séquence par défaut des étapes du mode de configuration comprend une étape de configuration de montée/descente 100, une étape de configuration de la position de fin de course haute 110, une étape de configuration de la position de fin de course basse 120 et une étape de sortie du mode de configuration 130. Après chaque étape la touche « OK » 20 doit être actionnée pour passer à l'étape suivante. Dans ce mode le sens du mouvement de l'élément mobile en réponse à une action sur une touche de commande est obligatoirement validé ou réglé à l'étape 100 qui permet de remédier aux éventuelles erreurs de câblage, et de faire face aux différents montages possibles des produits. On dispose ainsi d'opérations de configuration guidées, en ce sens qu'un enchaînement à respecter est automatiquement proposé et doit être suivi de manière obligatoire pour certaines séquences.

Les touches « Menu » 21 peuvent être utilisées, en dehors des enchaînements obligés, pour passer d'une étape à l'autre en évitant une étape intermédiaire ou pour passer d'une étape à l'autre dans un ordre différent de celui qui est prédéfini. Cette fonction de navigation dans les étapes est particulièrement utile si seulement certaines d'entre elles doivent être exécutées.

La séquence par défaut du mode de test comprend une étape de test de montée descente 200 (permettant de s'assurer que le sens du mouvement est bien en relation avec la touche de commande correspondante) et une étape de sortie du mode de test 210. La navigation entre les étapes de ce mode fonctionne comme mentionné plus haut. Un tel mode peut être utilisé pour tester le câblage d'une installation comprenant un actionneur comprenant des moyens mécaniques de détection des fins de course. On remarque qu'il est prévu que l'étape de test de montée descente 200 est automatiquement activée par la fin de l'étape de sortie du mode de configuration 130, ce qui constitue également une opération de configuration guidée.

La séquence du mode de remise à zéro comprend une étape de remise à zéro de toutes les positions de fin de course 310, une étape de remise à zéro de la position de fin de course haute 320, une étape de configuration de fin de course haute 330, une étape de remise à zéro de la position de fin de course basse 340, une étape de configuration de fin de course basse 350 et une étape de sortie du mode de remise à zéro 360. On remarque que certains enchaînements sont obligatoires à l'intérieur de ce mode, par exemple que l'étape de remise à zéro (ou d'effacement) de la position de fin de course haute 320 doit être immédiatement suivie par l'étape de configuration de fin de course haute 330. De nouveau, une telle configuration guidée évite les effets dangereux d'une distraction de l'installateur, et rend donc l'usage de l'outil de programmation particulièrement bénéfique.

Un exemple de mode de communication entre l'interface de programmation assistée et l'actionneur consiste en des séries de commutation permettant de relier ou non l'un ou l'autre ou les deux des conducteurs de phase du câble 4 à la phase de la source d'énergie électrique 3. Ces séries de commutations permettent de coder des informations qui sont entrées dans l'interface de programmation assistée par l'action de l'installateur sur celle-ci, elles sont décodées au niveau de l'unité de commande 60 de l'actionneur 2, puis converties en enregistrements dans la mémoire 61 de cette unité de commande.

Un mode de réalisation d'un actionneur 2 et d'une interface de programmation assistée 12 permettant une telle communication est par exemple décrit en référence à la figure 4.

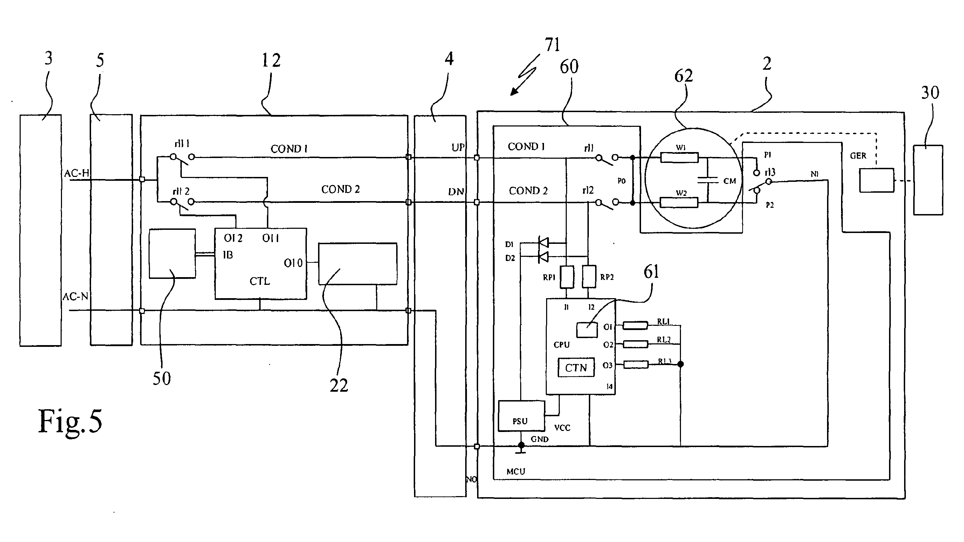

L'installation 71 représentée à la figure 5 comprend principalement un actionneur 2 et une interface de programmation assistée 12. L'installation est alimentée par le réseau alternatif 3, par le biais du câble 5 comprenant un conducteur de neutre AC-N et un conducteur de phase AC-H. L'interface de programmation assistée 12 permet d'appliquer le potentiel du conducteur de phase AC-H soit sur une entrée UP soit sur une entrée DN de l'actionneur, soit sur les deux simultanément. Le conducteur de neutre AC-N est raccordé à une borne de neutre N0 de l'actionneur 2.

Le moteur 62 est du type à induction, il comprend un premier enroulement W1, un deuxième enroulement W2 et un condensateur permanent CM. Le point commun aux deux enroulements P0 est relié à un premier contact de relais rl1 et à un deuxième contact de relais rl2. Lorsque le premier contact de relais est activé, le point commun P0 aux deux enroulements est relié à l'entrée UP et, lorsque le deuxième contact de relais est activé, le point commun P0 aux deux enroulements est relié à l'entrée DN.

Les deux autres extrémités P1 et P2 de chaque enroulement sont reliées aux bornes d'un condensateur permanent CM, permettant un déphasage approprié des courants parcourant chaque enroulement. Un contact relais inverseur rl3 permet une connexion d'un fil interne N1 soit à l'extrémité P1 du premier enroulement, soit à l'extrémité P2 du deuxième enroulement. Le fil interne N1 est relié à la borne de neutre N0.

L'unité de commande 60 comprend divers moyens assurant la commande du moteur 62, c'est-à-dire des moyens de réception et d'interprétation des ordres reçus, des moyens de commande d'alimentation de l'actionneur, et de coupure de cette alimentation soit par ordre soit lorsqu'une fin de course est détectée.

A cet effet, l'unité de commande 20 comprend un dispositif d'alimentation PSU très basse tension, par exemple 5 V. Le dispositif d'alimentation comprend par exemple un transformateur dont le secondaire permet de délivrer la tension d'alimentation VCC, après passage dans un redresseur et un élément de filtrage non représentés.

L'unité de commande 60 comprend une unité logique de traitement CPU tel qu'un microcontrôleur. Cette unité logique de traitement est alimentée par la tension d'alimentation VCC et comprend une première entrée I1 reliée à l'entrée UP par un premier montage abaisseur de tension RP1 et une deuxième entrée I2 reliée à l'entrée DN par un deuxième montage abaisseur de tension RP2.

Quand l'interface de programmation assistée 12 établit des contacts entre le conducteur de phase AC-H et les bornes d'entrée UP et DN, ces contacts peuvent être détectés par les entrées I1 et I2 de l'unité logique de traitement CPU. L'unité logique de traitement peut ainsi détecter les informations transmises par l'interface de programmation assistée. En conséquence, ces informations peuvent être enregistrées dans la mémoire 61 de l'unité logique de traitement.

L'unité logique de traitement CPU comprend une première sortie O1 alimentant une première bobine de relais RL1 et une deuxième sortie 02 alimentant une deuxième bobine de relais RL2, ces bobines agissant respectivement sur le premier contact de relais rl1 et sur le deuxième contact de relais rl2. L'unité logique de traitement comprend une troisième sortie 03 alimentant une troisième bobine de relais RL3. Cette bobine de relais agit sur la position du contact relais inverseur rl3. Selon que la bobine de relais RL3 est ou non alimentée, le moteur 62 tourne dans l'un ou l'autre sens.

Le clavier 50 de l'interface de programmation assistée 12 est relié à une entrée bus IB d'une unité logique de traitement CTL, telle qu'un microcontrôleur. L'unité logique de traitement CTL comprend une première sortie O11 reliée à une première bobine de relais et une deuxième sortie O12 reliée à une deuxième bobine de relais. Ces bobines agissent respectivement sur un premier contact rl11 et sur un deuxième contact rl12. Ces contacts ont un point commun relié au conducteur de phase AC-H, l'autre point étant relié respectivement à l'entrée UP ou à l'entrée DN de l'actionneur 2. Les interrupteurs rl1 et rl11 sont reliés par un conducteur référencé COND1 et les interrupteurs rl2 et rl12 par un conducteur référencé COND2.

L'écran 22 est relié à une sortie O10 de l'unité logique de traitement.

L'unité de commande 60 de l'actionneur 2 peut par exemple comprendre plusieurs modules logiciels gérant ces différents modes de fonctionnement. Ainsi, un premier module logiciel permet de gérer la configuration de l'actionneur lorsque celle-ci est effectuée comme évoqué dans l'art antérieur par des séries d'ergonomies particulières sur des touches de commande d'un interface de commande de structure très simple et un deuxième module logiciel permet de gérer la configuration de l'actionneur lorsque celle-ci est effectuée à l'aide d'un outil de programmation tel que celui décrit dans la présente demande.

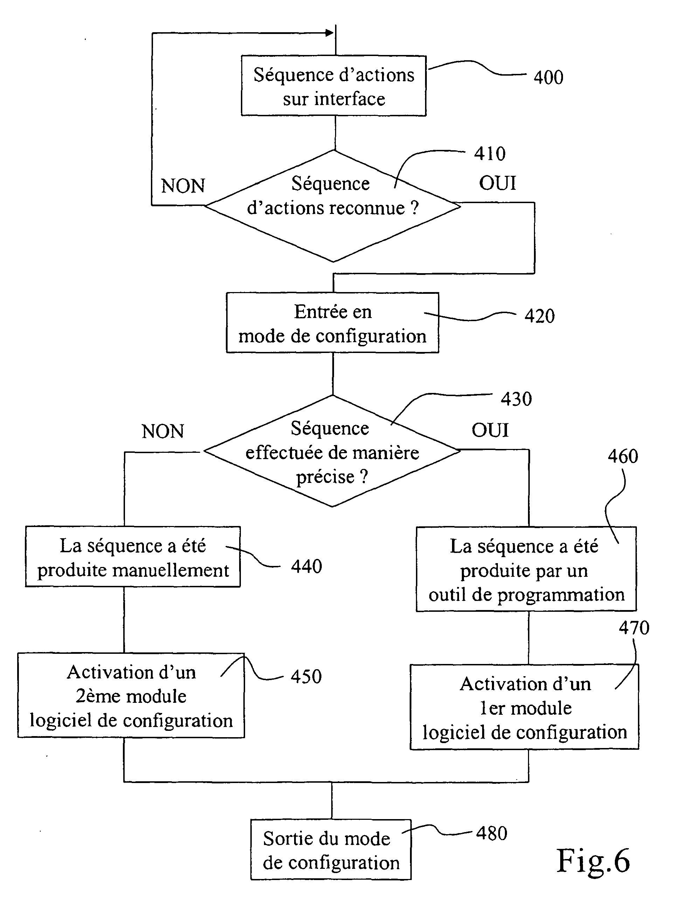

L'utilisation d'un outil de programmation peut être reconnue très aisément par l'unité de commande 60. Dans un exemple de mise en oeuvre d'une procédure de configuration de l'unité de commande (représentée à la figure 6), on suppose que pour faire basculer l'unité de commande 60 dans un mode de configuration il faut :
- relier la phase à la borne UP pendant une seconde,
- puis interrompre ce contact pendant une seconde et enfin
- réétablir ce contact pendant une seconde.

Dans une première étape 400, cette séquence d'actions est reproduite au niveau d'une interface reliée à l'unité de commande.

Dans une deuxième étape 410, l'unité de commande 60 teste si la séquence d'actions est valide. Si ce n'est pas le cas, on boucle sur l'étape précédente et si c'est le cas, l'unité de commande 60 bascule dans un mode de configuration lors d'une étape 420. Par exemple, afin que cette séquence puisse être mise en oeuvre manuellement par des actions sur les touches de commande d'une interface de commande, si la durée de chacune des phases de cette séquence est comprise entre 0,5 et 1,5 seconde (pour tenir compte des distorsions dans l'appréciation d'une durée d'une seconde que peuvent présenter différentes personnes), la séquence est reconnue comme étant valide.

Lors d'une étape de test 430, l'unité de commande teste la précision temporelle de chacune des actions de la séquence. Par exemple, si la séquence est réalisée et que la durée de chacune des étapes vaut 1 seconde (à plus ou moins 2% près), il est quasiment certain que la séquence a été réalisée à l'aide d'un outil de programmation, la séquence est considérée, dans une étape 460, comme telle et un premier module logiciel est activé dans une étape 470. Si ce n'est pas le cas, la séquence est considérée, dans une étape 440, comme ayant été effectuée manuellement par l'action d'un installateur sur une interface de commande et un deuxième module logiciel est activé dans une étape 450.

Une fois que toutes les opérations de configuration nécessaire ont été effectuées, on sort du mode de configuration de l'unité de commande 60 lors d'une étape 480.

On remarque que dans les différents cas, différents modules logiciels sont mis en oeuvre. Par exemple dans le deuxième module logiciel, une détection d'un contact établi pendant une durée de 3 secondes (comprise entre 2 et 4 secondes) entre la phase AC-H et la borne UP de l'unité de commande permet d'enregistrer la position courante de l'élément mobile comme étant la position de fin de course haute (ce contact étant effectué par action de l'installateur sur l'un des touches de commande d'une interface de commande), alors que dans le premier module logiciel, c'est une détection d'un contact établi pendant une durée de 0,3 seconde (compris entre 0,28 et 0,32 seconde) qui permet le même enregistrement (le contact étant établi par l'intermédiaire de l'outil de programmation).

De manière générale, dans le premier module logiciel, les séquences de commutations permettant d'effectuer les opérations de configuration sont très rapides afin que la configuration de l'unité de commande 60 de l'actionneur puisse être effectuée rapidement. Ces séquences de commutation sont telles qu'elles ne peuvent pas être mises en oeuvre par des actions réalisées manuellement par un installateur sur des touches de commande d'une interface de commande.

Il est à noter qu'après chaque étape de configuration de l'unité de commande, un message d'accusé de réception peut être émis par l'actionneur. Ce message peut par exemple comprendre une brève séquence d'actionnement de l'élément mobile et/ou l'émission d'un signal sonore, lumineux ou électrique.

En définitive, l'interface de programmation assistée de l'outil de programmation selon l'invention est donc doublement assistée : d'une part parce qu'elle permet de guider l'installateur dans ses opérations de programmation ou de re-réglage, d'autre part parce qu'elle permet de délivrer à l'unité de commande du dispositif des signaux de programmation beaucoup mieux calibrés temporellement que ce qui serait obtenu par des manoeuvres manuelles de l'installateur.

## Revendications

1. Outil de programmation (1) destiné à la configuration d'une installation domotique (70 ; 71) comprenant un dispositif (40) de fermeture, d'occultation, de protection solaire ou d'écran équipant un bâtiment et une interface de commande (15) de ce dispositif, **caractérisé en ce qu'**il comprend :
- une interface de programmation assistée (12) permettant de guider l'installateur dans ses opérations de programmation ou de re-réglage, munie de moyens d'information et d'un clavier (50) et proposant automatiquement un enchaînement d'opérations à respecter, et
- des moyens (4, 6, 7 ; 14) de liaison électrique amovible au dispositif (40) pour substituer l'interface de programmation assistée (12) à l'interface de commande (15) pendant l'exécution d'une procédure de configuration de l'installation (70;71).

2. Outil de programmation (1) selon la revendication précédente, **caractérisé en ce que** les moyens de liaison électrique amovible comprennent un câble (6) muni à son extrémité libre d'un connecteur (7).

3. Outil de programmation (1) selon l'une des revendications précédentes, **caractérisé en ce qu'**il comprend une embase (11) de programmation, cette embase présentant des éléments (83) de liaison mécanique et électrique coopérant avec des éléments (84) complémentaires de liaison mécanique et électrique prévus sur l'interface de programmation assistée (12) pour lier de manière amovible l'interface de programmation assistée (12) à l'embase (11).

4. Outil de programmation (1) selon l'une des revendications précédentes, **caractérisé en ce qu'**il comprend des moyens (5, 8) de liaison électrique amovible à une source d'énergie électrique (3).

5. Outil de programmation (1) selon l'une des revendications précédentes, **caractérisé en ce qu'**il comprend une source d'énergie électrique.

6. Outil de programmation (1) selon l'une des revendications précédentes, **caractérisé en ce qu'**il comprend des moyens (22) d'information de l'utilisateur.

7. Outil de programmation (1) selon l'une des revendications précédentes, **caractérisé en ce qu'**il comprend un boîtier (9).

8. Outil de programmation (1) selon la revendication précédente, **caractérisé en ce que** le boîtier (9) comprend des espaces de rangement.

9. Système domotique (90) comprenant un outil de programmation (1) selon l'une des revendications précédentes et une installation domotique (70 ; 71) comprenant un dispositif (40) de fermeture, d'occultation, de protection solaire ou d'écran équipant un bâtiment et une interface de commande (15) de ce dispositif, **caractérisé en ce qu'**il comprend un boîtier de commande (13) relié électriquement au dispositif (40) de fermeture, d'occultation, de protection solaire ou d'écran équipant un bâtiment, ce boîtier (13) comprenant une embase (14) présentant des éléments (81) de liaison mécanique et électrique coopérant avec des éléments (82) complémentaires de liaison mécanique et électrique prévus sur l'interface de commande (15) et avec des éléments complémentaires de liaison mécanique et électrique prévus sur une interface de programmation assistée (12) de manière à ce que, soit l'interface de commande (15), soit l'interface de programmation assistée (12) puisse être liée de manière amovible à l'embase (14).

10. Système domotique (90) selon la revendication 9, **caractérisé en ce que** les circuits électroniques de l'interface de programmation assistée (12) et de l'interface de commande (15) sont identiques et mettent en oeuvre des modules logiciels différents.

11. Procédé de configuration d'une installation domotique (70 ; 71) comprenant un dispositif (40) de fermeture, d'occultation, de protection solaire ou d'écran équipant un bâtiment et une interface de commande (15) de ce dispositif, **caractérisé en ce qu'**il comprend les étapes suivantes :
- connecter électriquement au dispositif (40) de fermeture, d'occultation, de protection solaire ou d'écran, un outil de programmation (1) comprenant une interface de programmation assistée permettant de guider l'installateur dans ses opérations de programmation ou de re-réglage et munie de moyens d'information et d'un clavier (50),
- effectuer des opérations de configuration guidées, un enchaînement à respecter étant automatiquement proposé,
- déconnecter électriquement l'outil de programmation (1) du dispositif (40) de fermeture, d'occultation, de protection solaire ou d'écran.

12. Procédé de configuration selon la revendication précédente, **caractérisé en ce que** l'étape : effectuer des opérations de configuration guidées comprend au moins une phase de navigation dans un menu.

13. Procédé de configuration selon la revendication 11 ou 12, **caractérisé en ce que** l'étape : effectuer des opérations de configuration guidées comprend au moins l'un des enchaînements suivants : réglage du sens de fonctionnement (100) précédant de manière obligée le réglage d'une position particulière (110, 120), test de fonctionnement (200) suivant de manière obligée la sortie du mode de configuration (130), re-réglage d'une position particulière (330, 350) suivant de manière obligée l'effacement de cette position particulière (320, 340).

## Claims

1. Programming tool (1) for configuring a home automation installation (70, 71) containing a closing, privacy, solar protecting or screen device (40) with which a building is equipped, and a control interface (15) for this device **characterised in that** it includes
- an assisted programming interface (12) allowing to guide the installer in his programming or adjusting actions and equipped with information means and a keyboard (50), and automatically suggesting an operation sequence to be followed, and
- removable electric connecting means (4, 6, 7; 14) on the device (40) provided for substituting the assisted programming interface (12) for the control interface (15) during the execution of a configuration procedure for the installation (70; 71).

2. Programming tool (1) according to the preceding claim, **characterised in that** the removable electric connecting means include a cable (6) equipped with a connector (7) at its free end.

3. Programming tool (1) according to one of the preceding claims, **characterised in that** it includes a programming socket (11), this socket having mechanical and electric connecting elements (83) coacting with complementary mechanical and electric connecting elements (84) provided on the assisted programming interface (12) for connecting the assisted programming interface (12) in a removable manner to the socket (11).

4. Programming tool (1) according to one of the preceding claims, **characterised in that** it includes means (5, 8) for a removable electric connection with a source (3) of electric energy.

5. Programming tool (1) according to one of the preceding claims, **characterised in that** it includes a source of electric energy.

6. Programming tool (1) according to one of the preceding claims, **characterised in that** it includes user information means (22).

7. Programming tool (1) according to one of the preceding claims, **characterised in that** it includes a housing (9).

8. Programming tool (1) according to the preceding claim, **characterised in that** the housing (9) includes storage spaces.

9. Home automation system (90), including a programming tool (1) according to one of the preceding claims, and a home automation installation (70, 71) comprising a closing, privacy, solar protecting or screen device (40) with which a building is equipped, and a control interface (15) for this device, **characterised in that** it includes a control casing (13) electrically connected to the closing, privacy, solar protecting or screen device (40) with which a building is equipped, this casing (13) including a socket (14) having mechanical and electric connecting elements (81) coacting with complementary mechanical and electric connecting elements (82) provided on the control interface (15) and with complementary mechanical and electric connecting elements provided on the assisted programming interface (12), in such a manner that either the control interface (15) or the assisted programming interface (12) can be connected to the socket (14) in a removable manner.

10. Home automation system (90) according to claim 9, **characterised in that** the electronic circuits of the assisted programming interface (12) and of the control interface (15) are identical and implement different logic modules.

11. Method of configuring a home automation installation (70; 71) including a closing, privacy, solar protecting or screen device (40) with which a building is equipped, and a control interface (15) for this device, **characterised in that** it comprises the following steps:
- electrically connecting a programming tool (1) including an assisted programming interface allowing to guide the installer in his programming or readjusting actions and equipped with information means and with a keyboard (50), to the closing, privacy, solar protecting or screen device (40),
- executing guided configuration actions, a sequence to be followed being automatically proposed,
- electrically disconnecting the programming tool (1) from the closing, privacy, solar protecting or screen device (40).

12. Method of configuring according to the preceding claim, **characterised in that** the step of executing guided configuration actions comprises at least one phase of browsing within a menu.

13. Method of configuration according to claim 11 or 12, **characterised in that** the step of executing guided configuration actions includes at least one of the following sequences: adjusting the direction of movement (100) imperatively before adjusting a particular position (110, 120); testing the functioning (200) imperatively after the exit from the configuration mode (130); readjusting a particular position (330, 350) imperatively after the deletion (320, 340) of this particular position.

## Patentansprüche

1. Programmierwerkzeug (1), welches zur Konfiguration einer haustechnischen Anlage (70; 71) bestimmt ist, mit einer Vorrichtung (40) zum Schliessen, zur Verdunkelung, zum Sonnenschutz oder zur Abschirmung, mit der ein Gebäude ausgestattet ist, und mit einer Befehlsschnittstelle (15) für diese Vorrichtung, **dadurch gekennzeichnet, dass** das Werkzeug
- eine Schnittstelle zur unterstützten Programmierung (12), welche eine Anleitung des Installateurs bei seiner Tätigkeit zum Programmieren oder zum Einstellen ermöglicht und mit Mitteln zur Information sowie mit einer Tastatur (50) versehen ist und automatisch eine Abfolge von Vorgängen vorschlägt, welche einzuhalten ist, und
- Mittel (4, 6, 7; 14) zur lösbaren elektrischen Verbindung mit der Vorrichtung (40) zwecks Austausch der Schnittstelle zur unterstützten Programmierung (12) gegen die Befehlsschnittstelle (15) im Verlauf eines Verfahrens zur Konfiguration der Anlage (70; 71) enthält.

2. Programmierwerkzeug (1) nach vorstehendem Anspruch, **dadurch gekennzeichnet, dass** die Mittel zur lösbaren elektrischen Verbindung ein Kabel (6) aufweisen, welches an seinem freien Ende mit einem Stecker (7) versehen ist.

3. Programmierwerkzeug (1) nach einem der vorstehenden Ansprüche, **dadurch gekennzeichnet, dass** es einen Programmiersockel (11) aufweist, wobei dieser Sockel mit Elementen (83) zur mechanischen und elektrischen Verbindung versehen ist, welche mit komplementären Elementen (84) zur mechanischen und elektrischen Verbindung zusammenwirken, die auf der Schnittstelle zur unterstützten Programmierung (12) vorgesehen sind, um die Schnittstelle zur unterstützten Programmierung (12) lösbar mit dem Sockel (11) zu verbinden.

4. Programmierwerkzeug (1) nach einem der vorstehenden Ansprüche, **dadurch gekennzeichnet, dass** es Mittel (5, 8) zur lösbaren elektrischen Verbindung mit einer elektrischen Energiequelle (3) aufweist.

5. Programmierwerkzeug (1) nach einem der vorstehenden Ansprüche, **dadurch gekennzeichnet, dass** es eine Quelle elektrischer Energie aufweist.

6. Programmierwerkzeug (1) nach einem der vorstehenden Ansprüche, **dadurch gekennzeichnet, dass** es Mittel (22) zur Information des Benutzers aufweist.

7. Programmierwerkzeug (1) nach einem der vorstehenden Ansprüche, **dadurch gekennzeichnet, dass** es ein Gehäuse (9) aufweist.

8. Programmierwerkzeug (1) nach vorstehendem Anspruch, **dadurch gekennzeichnet, dass** das Gehäuse (9) Stauräume aufweist.

9. Haustechnisches System (90) mit einem Programmierwerkzeug (1) nach einem der vorstehenden Ansprüche sowie einer haustechnischen Anlage (70; 71), welche eine Vorrichtung (40) zum Schliessen, zur Verdunkelung, zum Sonnenschutz oder zur Abschirmung, mit der ein Gebäude ausgestattet ist, sowie eine Befehlsschnittstelle (15) für diese Vorrichtung aufweist, **dadurch gekennzeichnet, dass** das System ein Steuergerät (13) besitzt, das elektrisch mit der Vorrichtung (40) zum Schliessen, zur Abdunklung, zum Sonnenschutz oder zur Abschirmung, mit der ein Gebäude ausgestattet ist, verbunden ist, wobei dieses Gerät (13) einen Sockel (14) mit Elementen (81) zur mechanischen und elektrischen Verbindung aufweist, welche mit komplementären Elementen (82) zur mechanischen und elektrischen Verbindung zusammenwirken, die auf der Befehlsschnittstelle (15) vorgesehen sind, sowie mit komplementären Elementen zur mechanischen und elektrischen Verbindung, die auf einer Schnittstelle zur unterstützten Programmierung (12) vorgesehen sind, derart, dass entweder die Befehlsschnittstelle (15) oder die Schnittstelle zur unterstützten Programmierung (12) lösbar mit dem Sockel (14) verbunden werden kann.

10. Haustechnisches System (90) nach Anspruch 9, **dadurch gekennzeichnet, dass** die elektronischen Schaltungen der Schnittstelle zur unterstützten Programmierung (12) und der Befehlsschnittstelle (15) identisch sind und unterschiedliche Software-Module verwenden.

11. Verfahren zur Konfiguration einer haustechnischen Anlage (70; 71), mit einer Vorrichtung (40) zum Schliessen, zur Verdunkelung, zum Sonnenschutz oder zur Abschirmung, mit der ein Gebäude ausgestattet ist, sowie mit einer Befehlsschnittstelle (15) für diese Vorrichtung, **dadurch gekennzeichnet, dass** es die folgenden Schritte aufweist:
- elektrische Verbindung eines Programmierwerkzeugs (1), das eine Schnittstelle zur unterstützten Programmierung aufweist, welche eine Anleitung des Installateurs bei seiner Tätigkeit zum Programmieren oder zur Neueinstellung ermöglicht und welche mit Informationsmitteln sowie mit einer Tastatur (50) versehen ist, mit der Vorrichtung (40) zum Schliessen, zur Verdunklung, zum Sonnenschutz oder zur Abschirmung,
- Ausführung von angeleiteten Tätigkeiten zur Konfiguration, wobei eine Aufeinanderfolge, die zu respektieren ist, automatisch vorgeschlagen wird,
- elektrische Trennung des Programmierwerkzeugs (1) von der Vorrichtung (40) zum Schliessen, zur Verdunkelung, zum Sonnenschutz oder zur Abschirmung.

12. Verfahren zur Konfiguration nach vorstehendem Anspruch, **dadurch gekennzeichnet, dass** der Schritt zur Ausführung angeleiteter Tätigkeiten zur Konfiguration mindestens eine Phase aufweist, in der sich in einem Menü bewegt wird.

13. Verfahren zur Konfiguration nach Anspruch 11 oder 12, **dadurch gekennzeichnet, dass** der Schritt zur Ausführung angeleiteter Tätigkeiten zur Konfiguration mindestens eine der nachstehenden Abfolgen aufweist: Einstellung der Funktionsrichtung (100) unbedingt vor der Einstellung einer besonderen Stellung (110, 120), Funktionstest (200), welcher zwangsläufig nach dem Verlassen des Konfigurationsmodus (130) ausgeführt wird, erneute Einstellung einer besonderen Position (330, 350) zwangsläufig nach dem Löschen dieser besonderen Position (320, 340).
